(19) Europäisches Patentamt

European Patent Office

Office européen des brevets

(11) EP 4 776 188 A1

(12) EUROPEAN PATENT APPLICATION

(43) Date of publication:
15.07.2026 Bulletin 2026/29

(21) Application number: 25205252.7

(22) Date of filing: 29.09.2025

(51) International Patent Classification (IPC):
G06N 3/098 $^{(2023.01)}$      G06N 3/045 $^{(2023.01)}$
G06N 3/0475 $^{(2023.01)}$

(52) Cooperative Patent Classification (CPC):
G06N 3/098; G06N 3/045; G06N 3/0475

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 10.01.2025 KR 20250004415

(71) Applicant: Korea Advanced Institute of Science
and Technology
Daejeon 34141 (KR)

(72) Inventors:
• KANG, Joonhyuk
34141 Daejeon (KR)
• LEE, Youngjoon
34141 Daejeon (KR)
• GONG, Jinu
34141 Daejeon (KR)

(74) Representative: Viering, Jentschura & Partner
mbB
Patent- und Rechtsanwälte
Am Brauhaus 8
01099 Dresden (DE)

(54) **FEDERATED LEARNING METHOD AND FEDERATED LEARNING SYSTEM FOR PERFORMING THE SAME**

(57) A federated learning method includes sampling at least one edge device to perform a federated learning based on a local data of each of edge devices, aggregating a result of a local learning by performing the local learning of the edge device which is sampled, generating a global weight based on the result of the local learning which is aggregated, and broadcasting to each of the edge devices.

FIG. 1

EP 4 776 188 A1

**Description**

CROSS-REFERENCE TO RELATED APPLICATION(S)

This application claims priority under 35 U.S.C. §119 to Korean Patent Application No. 10-2025-0004415, filed on January 10, 2025, which is hereby incorporated by reference for all purposes as if fully set forth herein.

BACKGROUND

1. FIELD

Embodiments relate to a federated learning method and a federated learning system for performing the same. More particularly, embodiments relate to the federated learning method for compensating for data distribution imbalance, and the federated learning system for performing the same.

2. DESCRIPTION OF THE RELATED ART

A federated learning is a learning method in which data generated locally is stored on a local client, such as an edge device, and used to train a client neural network model stored on the edge device, with the neural network models being integrated by a central server. Although the network structures of the client neural network models stored on the edge devices are the same, each model may have different weights or parameters due to differences in training data. A main neural network model stored in a central server performs training by aggregating the weights corresponding to each of the client neural network models.

The training data of each edge device has a non-IID (non-independent and identically distributed) distribution, and edge devices participating in the federated learning may be selected at random. However, in such cases, edge devices with stable data distributions may be excluded, so that convergence speed and performance of the federated learning process may be degraded.

SUMMARY

Embodiments provide a federated learning method with improved performance in federated learning.

Embodiments provide a federated learning system for performing the federated learning method.

A federated learning method according to an embodiment includes sampling at least one edge device to perform a federated learning based on a local data of each of edge devices, aggregating a result of a local learning by performing the local learning of the edge device which is sampled, generating a global weight based on the result of the local learning which is aggregated, and broadcasting the global weight to each of the edge devices.

In an embodiment, the sampling of at least one edge device may include performing a data synthesis based on a data distribution among classes in the local data in each of the edge devices, and determining and selecting a data approximating an IID distribution among complementary data for which the data synthesis is completed.

In an embodiment, the performing of the data synthesis may include searching for a synthesis reference class to which a maximum data among the classes in the local data belongs, generating an individual synthetic data for each class based on a data size difference between the maximum data and a data included in a class other than the synthesis reference class among the classes, and generating a complementary data using the local data before the data synthesis and the individual synthetic data.

In an embodiment, in the generating of the individual synthetic data, the individual synthetic data for a class whose data size is not 0 may be generated using a data difference ratio obtained by dividing the data size difference by a total data size of the edge device where the local data is stored.

In an embodiment, in the generating of the individual synthetic data, a size of the individual synthetic data for a class, which has a data size of 0, may be 0.

In an embodiment, the data difference ratio may be defined according to an [Equation 1] below.

[Equation 1]

$$\Delta_c = \frac{\left| D_{i,max} \right| - \left| D_{i,c} \right|}{\left| D_i \right|} \quad if \ \left| D_{i,c} \right| > 0$$

Here, $D_{i,c}$ may mean the local data before the data synthesis for each edge device and each class is performed, $\Delta_c$ may mean the data difference ratio for the each class, $D_{i,max}$ may mean the maximum data belonging to the synthesis reference class among the data included in the local data, and $D_i$ may mean the local data before the data synthesis for the each edge device is performed and an absolute value symbol may mean a size of the data.

In an embodiment, the individual synthetic data may be generated according to [Equation 2] below.

[Equation 2]

$$G_c(D_i) = \begin{bmatrix} r(1, \Delta_c \cdot |D_i|) \; if \; |D_{i,c}| > 0 \\ 0 \qquad\qquad if \; |D_{i,c}| = 0 \end{bmatrix}$$

Here, $G(D_i)$ may mean the individual synthetic data for the each class and the each edge device, and $r(1,N)$ may mean a function that generates a random integer greater than or equal to 1 and less than N.

In an embodiment, the aggregating of the result of the local learning may include generating an individual data ratio for each edge device and each class using the complementary data for which is synthesized, operating a distance between an IID distribution ratio, which is an inverse of a total classes, and the individual data ratio, searching for a global data ratio approximating the IID distribution ratio based on the distance between the individual data ratio and the IID distribution ratio, and selecting the edge devices which have the global data ratio.

In an embodiment, in the operating of the distance between an IID distribution ratio and the individual data ratio, the distance between the IID distribution ratio and the individual data ratio may be operated using a Fisher information matrix.

In an embodiment, in the generating of the individual data ratio, the individual data ratio may be operated according to an [Equation 3] below.

[Equation 3]

$$p_i(y_c) = \frac{|(x_j, y_j) \in D_i' : y_j = y_c|}{|D_i'|}$$

Here, 'i' may mean the each edge device, 'c' may mean the each class, $x_j$ may mean a data in the each class, $y_j$ means a classification label for the each class, $D_i'$ may mean the complementary data of the each edge device, and $p_i(y_c)$ may mean the individual data ratio.

In an embodiment, in the searching for the global data ratio approximating the IID distribution ratio, the global data ratio may be operated according to an [Equation 4] below.

[Equation 4]

$$p_g(y_c) = \frac{\sum_{i=1}^m p_i(y_c) \cdot |D_i'|}{\sum_{i=1}^m |D_i'|}$$

Here, 'i' may mean the each edge device, 'm' may mean a number of the edge device selected for operating the global data ratio, $|D_i'|$ may mean a size of the complementary data included in the each edge device, $y_c$ may mean a classification label of a specific class, $p_i(y_c)$ may mean the individual data ratio, and $p_g(y_c)$ may mean the global data ratio for the each class.

In an embodiment, in the generating of the global weight, the global weight may be generated based on an average of weights collected from the edge devices on which the local learning is performed.

A federated learning system according to an embodiment includes a plurality of edge devices configured to perform a local learning using a local data which is stored and to synthesize a data based on a data distribution among classes in the local data and a central server configured to receive a weight of complementary data synthesized from each of the plurality of edge devices, and to sample an edge device to participate in a federated learning among the plurality of edge devices based on the weight of the complementary data.

In an embodiment, each of the plurality of edge devices may be configured to determine a synthesis reference class to which a maximum data among the classes belongs, and to generate a synthetic data based on a data size difference between the maximum data and a data included in a class different from the synthesis reference class.

In an embodiment, the synthetic data may include an individual synthetic data for each class, and the complementary data is a sum of the local data before synthesis and the synthetic data.

In the federated learning method according to embodiments of the present inventive concept, a data synthesis may be performed based on a data distribution among classes in the local data of each of edge devices, and data approximating an IID distribution may be identified and selected from among a complementary data of the edge devices. Accordingly, sampling edge devices to participate in the federated learning by identifying a combination of arbitrary edge devices having a distribution approximating the IID distribution from among the plurality of edge devices may be possible. Accordingly, a performance deviation during the federated learning process may be reduced, and a convergence speed of a global training model in a central server may be accelerated, thereby enabling high-performance federated learning even in environments where data is imbalanced or insufficient.

In the federated learning system according to embodiments of the present inventive concept, each of the plurality of edge devices may perform the data synthesis, and the central server may search for the edge devices having a distribution approximating the IID distribution and select edge devices to participate in the federated learning. Accordingly, the federated learning system with improved performance may be easily provided.

BRIEF DESCRIPTION OF THE DRAWINGS

Illustrative, non-limiting embodiments will be more clearly understood from the following detailed description in conjunction with the accompanying drawings.

FIG. 1 is a block diagram illustrating a federated learning system according to an embodiment of the present inventive concept.
FIG. 2 is a flowchart illustrating a federated learning method performed by the federated learning system of FIG. 1.
FIG. 3 is a flowchart illustrating sampling an edge device to perform the federated learning based on a local data of each of edge devices of FIG. 2.
FIG. 4 is a diagram for explaining the sampling of the edge device to perform the federated learning based on the local data of each of the edge devices of FIG. 2.
FIG. 5 is a diagram for explaining performing data synthesis based on a data distribution among classes in the local data of FIG. 3.
FIG. 6 is a diagram for explaining determining and selecting a data approximating an IID distribution among complementary data of the edge devices of FIG. 3.

DETAILED DESCRIPTION OF THE EMBODIMENTS

The embodiments of the present inventive concept disclosed herein are merely exemplary for the purpose of describing specific structural or functional aspects, and the embodiments of the present inventive concept may be implemented in various forms and should not be construed as being limited to the embodiments described herein.

The present inventive concept may be subject to various modifications and may take on various forms. While specific embodiments are illustrated in the drawings and described in detail in the specification, this is not intended to limit the present inventive concept to the specific forms disclosed. Rather, it should be understood that all modifications, equivalents, and substitutes that fall within the spirit and scope of the present inventive concept are included.

Terms such as "first" and "second" may be used to describe various elements, but the elements should not be limited by these terms. These terms are used merely to distinguish one element from another. For example, without departing from the scope of the present inventive concept, a "first" component may be referred to as a "second" component, and similarly, a "second" component may be referred to as a "first" component.

When an element is referred to as being "connected to" or "coupled to" another element, it may be directly connected or coupled to the other element, or intervening elements may be present. In contrast, when an element is referred to as being "directly connected to" or "directly coupled to" another element, it should be understood that there are no intervening elements. Other expressions describing relationships between components, such as "between" and "immediately between" or "adjacent to" and "directly adjacent to", should be interpreted in the same manner.

The terminology used herein is for the purpose of describing particular embodiments only and is not intended to limit the present inventive concept. As used in this application, the singular forms also include the plural forms unless the context clearly indicates otherwise. Terms such as "comprise" and "have" or the like are intended to specify the presence of stated features, numbers, steps, operations, components, parts, or combinations thereof, but do not preclude the presence or addition of one or more other features, numbers, steps, operations, components, parts, or combinations thereof.

Unless otherwise defined, all technical and scientific terms used herein have the same meaning as commonly understood by one of ordinary skill in the art to which this inventive concept belongs. Terms defined in commonly used dictionaries should be interpreted as having meanings consistent with their use in the context of the relevant art and should not be interpreted in an idealized or overly formal sense unless expressly so defined herein.

Meanwhile, in certain embodiments, the functions or operations described in specific blocks may occur in a different order than that indicated in a flowchart if implemented differently. For example, two successive blocks may actually be executed substantially simultaneously, or the blocks may sometimes be executed in reverse order depending on the relevant functions or operations.

Hereinafter, preferred embodiments of the present inventive concept will be described in more detail with reference to the accompanying drawings. In the drawings, the same reference numerals are used for the same components, and redundant descriptions of the same components will be omitted.

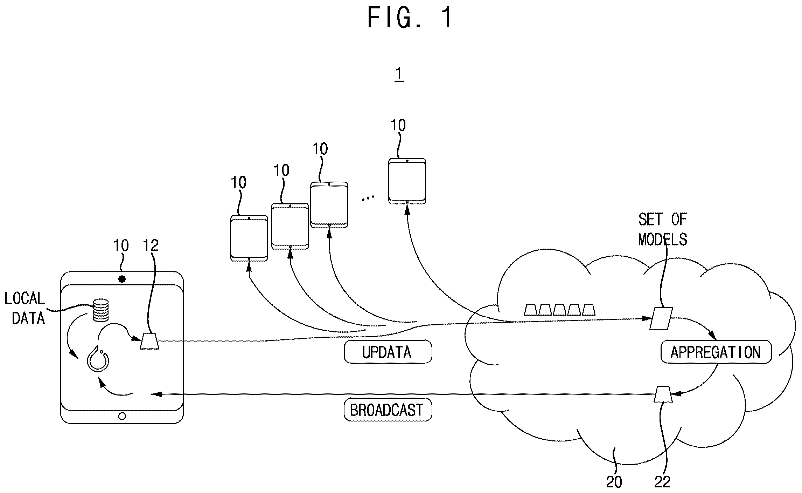

FIG. 1 is a block diagram illustrating a federated learning system according to an embodiment of the present inventive concept.

Referring to FIG. 1, a federated learning system 1 according to an embodiment of the present inventive concept may include a plurality of edge devices 10 and a central server 20. Number and type of the plurality of edge devices 10 illustrated in FIG. 1 included in the federated learning system 1 may not be limited thereto, and various types and numbers of edge devices may be included.

Each of the plurality of edge devices 10 may be a terminal in which a client or a user is provided with a service based on an artificial neural network model. For example, each of the plurality of edge devices 10 may be referred to as a terminal providing a face recognition service based on an artificial neural network, a local device, a user terminal, and the like. The terminal may be a concept including all digital devices equipped with memory means and mounted with a processor having a computing capability, such as a wearable device, a tablet PC, a smartphone, a personal computer (e.g., a notebook computer and the like), a smart TV, a mobile phone, a navigation device, a web pad, a PDA, a workstation, and the like. However, the type of the terminal referred to as each of the plurality of edge devices 10 according to embodiments of the present inventive concept may not be limited thereto, and the client may further include various electronic devices capable of providing services based on an artificial neural network (e.g., Internet of Things (IoT) devices, medical devices, autonomous driving devices, and the like).

Learning using the artificial neural network of each of the plurality of edge devices 10 may be referred to as local learning, and the local learning may be performed using local data stored in each of the plurality of edge devices 10. Each of the plurality of edge devices 10 may include a local training model 12. The local training model 12 may be an artificial intelligence model that performs computation based on deep learning or machine learning using the local data within one edge device. However, relationship between the edge device and the local training model 12 according to embodiments of the present inventive concept may not be limited thereto, and the local training model 12 may be mounted in a separate device communicating with the edge device outside one edge device.

In an embodiment, the local training model 12 included in each of the plurality of edge devices 10 may be trained or learned through the local learning. Accordingly, an updated weight or parameter of the learned local training model 12 may be transmitted to the central server 20. Accordingly, since the plurality of edge devices 10 and the central server 20 exchange weights with each other, the local data included in each of the plurality of edge devices 10 may not be directly transmitted to the central server 20, and the local data included in the different edge devices 10 may not be shared with each other. Therefore, according to the federated learning system 1, concerns about privacy invasion are reduced, and problems of leakage of personal information may be prevented.

The central server 20 may be connected to each of the plurality of edge devices 10 through a network. For example, the network may include the Internet, one or more local area networks, wide area networks, cellular networks, mobile networks, other types of networks, or a combination thereof.

The central server 20 may receive data on learning from each of the plurality of edge devices 10. For example, the central server 20 may receive the plurality of weights updated through learning of a plurality of local models from the plurality of edge devices 10, and may aggregate the weights. The process in which the central server 20 aggregates the plurality of weights may also be referred to as global aggregation.

The central server 20 may include a global training model 22. The global training model 22 may be an artificial intelligence model that performs computation based on deep learning or machine learning using data received in the central server 20. However, the relationship between the central server 20 and the global training model 22 according to embodiments of the present inventive concept may not be limited thereto, and the global training model 22 may be mounted in a separate device communicating with the central server 20 outside the central server 20.

The central server 20 may update the global training model 22 included in the central server 20 based on the aggregated weights. After the global training model 22 is updated, the central server 20 may perform broadcasting. For example, the central server 20 may transmit updated global weights from the global training model 22 to each of the plurality of edge devices 10, so that each of the plurality of edge devices 10 may be updated.

In an embodiment, each of the plurality of edge devices 10 may classify data included in the local data into a plurality of classes, and may synthesize data based on the distribution of the data included in each of the plurality of classes. Specifically, when each of the plurality of edge devices 10 determines a deviation between distributions of data included in different classes exist or the deviation is relatively large, each of the plurality of edge devices 10 may perform data synthesis so that the deviation decreases or approaches zero, thereby increasing the amount of data included in a class having a small amount of data. The plurality of classes or the class may be a classification label or a group for data labeling for learning.

In an embodiment, the central server 20 may receive a weight of complementary data in which data synthesized (hereinafter, a synthetic data) to reduce the deviation in each of the plurality of edge devices 10 and existing local data are combined. Thereafter, the central server 20 may sample at least one edge device including at least one complementary data having a data distribution relatively close to an IID (independent and identically distributed) distribution in which data distributions are uniformly formed, based on the weight of the complementary data. Accordingly, the central server 20 may train the local training model 12 of the sampled edge device, receive updated weights, and aggregate the updated weights in the central server 20.

In other words, each of the plurality of edge devices 10 may perform data synthesis so that the local data approaches an IID distribution, and the central server 20 may sample at least one edge device close to the IID distribution based on the complementary data. After the data synthesis process and the sampling process are completed, the federated learning of the federated learning system 1 may be performed. Accordingly, in the federated learning system 1, prior to performing the federated learning, the edge device to participate in the federated learning may not be selected randomly, and since the federated learning is performed by selecting only the edge devices with small data deviation, the performance of the federated learning is improved, and unnecessary time and resource waste may be reduced.

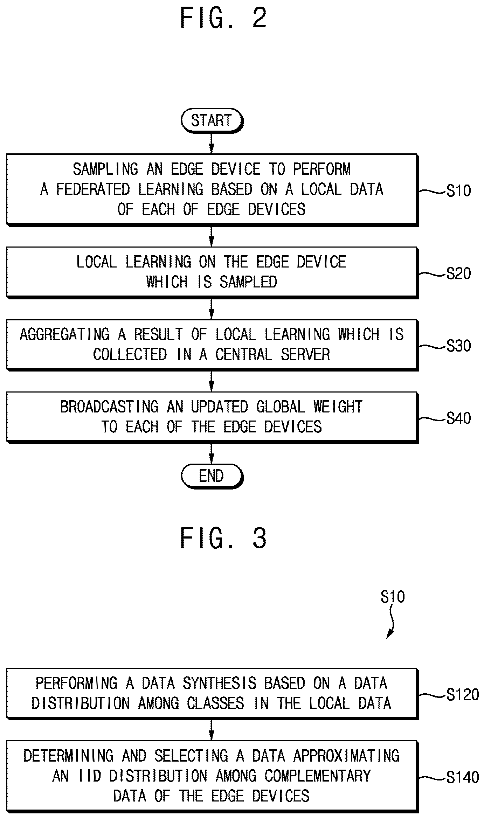

FIG. 2 is a flowchart illustrating a federated learning method performed by the federated learning system of FIG. 1. FIG. 3 is a flowchart illustrating sampling an edge device to perform the federated learning based on a local data of each of edge devices of FIG. 2.

Referring to FIGS. 1, 2, and 3, a federated learning method according to an embodiment of the present inventive concept may include sampling an edge device to perform the federated learning based on the local data of each of the edge devices 10 (S10), local learning on the edge device which is sampled (S20), aggregating a collected result of local learning in the central server 20 (S30), and broadcasting an update global weight to each of the edge devices 10 (S40). The sampling the edge device to perform the federated learning based on the local data of each of the edge devices 10 (S10) may include performing a data synthesis based on a data distribution among classes in the local data (S120) and determining and selecting a data approximating an IID distribution among complementary data of the edge devices 10 (S140).

In an embodiment, the sampling the edge device to perform the federated learning based on the local data of each of the edge devices 10 (S10), the local learning on the edge device which is sampled (S20), the aggregating a collected result of local learning in the central server 20 (S30), and the broadcasting an update global weight to each of the edge devices 10 (S40) may be performed by the federated learning system 1.

In an embodiment, each of the edge devices 10 and the central server 20 may perform the sampling the edge device to perform the federated learning based on the local data of each of the edge devices 10 (S10) together. For example, each of the edge devices 10 may perform performing the data synthesis based on the data distribution among the classes in the local data (S120). For example, the central server may perform the determining and selecting the data approximating the IID distribution among the complementary data of the edge devices 10 (S140).

In an embodiment, the local learning on the edge device which is sampled (S20) may be performed by each of the plurality of edge devices 10. The aggregating a collected result of local learning in the central server 20 (S30) may be performed by the central server 20. The broadcasting an update global weight to each of the edge devices 10 (S40) may be performed by the central server 20. After the broadcasting an update global weight to each of the edge devices 10 (S40) is performed, each of the plurality of edge devices 10 may receive the global weights and be updated. In addition, after the broadcasting an update global weight to each of the edge devices 10 (S40) is performed, until the user reaches a targeted or preset performance, convergence speed, and the like, the sampling the edge device to perform the federated learning based on the local data of each of the edge devices 10 (S10), the local learning on the edge device which is sampled (S20), the aggregating a collected result of local learning in the central server 20 (S30), and the broadcasting an update global weight to each of the edge devices 10 (S40) may be repeated.

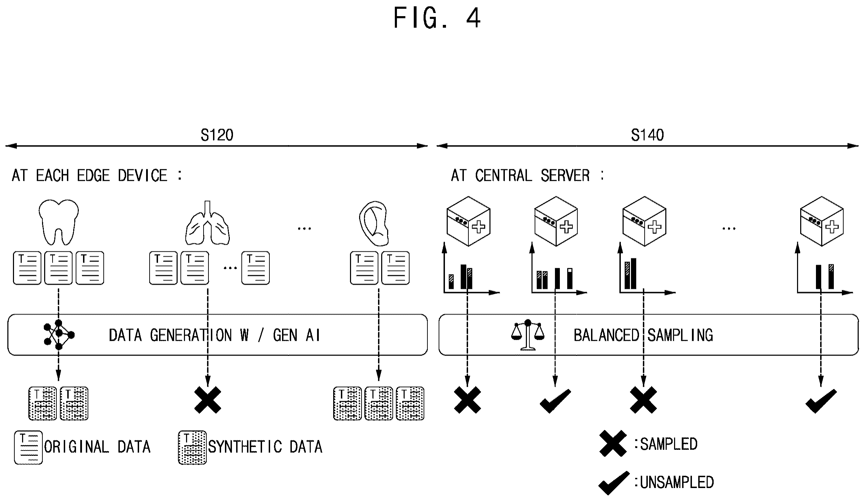

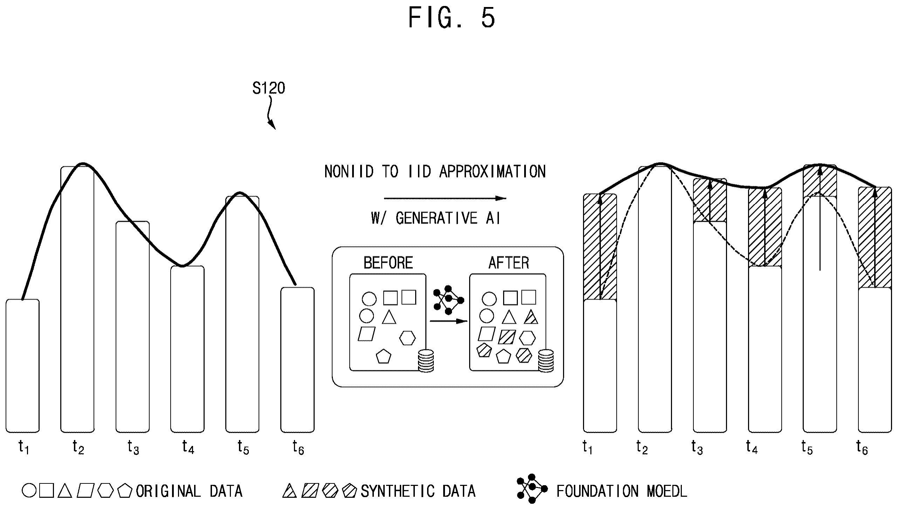

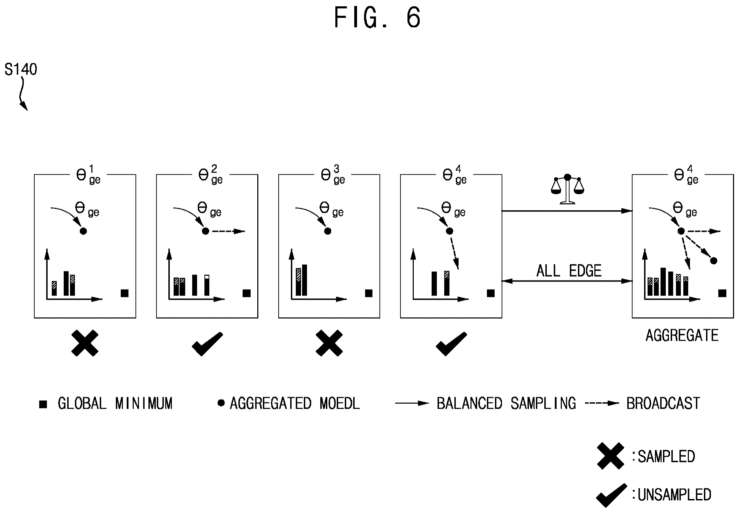

FIG. 4 is a diagram for explaining the sampling of the edge device to perform the federated learning based on the local data of each of the edge devices of FIG. 2. FIG. 5 is a diagram for explaining performing data synthesis based on a data distribution among classes in the local data of FIG. 3. FIG. 6 is a diagram for explaining determining and selecting a data approximating an IID distribution among complementary data of the edge devices of FIG. 3.

Referring to FIGS. 1 to 6, in an embodiment, the performing the data synthesis based on the data distribution among the classes in the local data (S120) may be performed by a generative artificial intelligence model (Gen AI) included in each of the edge devices 10. In an embodiment, the generative artificial intelligence model may be integrally formed with the local training model 12 in one edge device or may be included in the local training model 12. In another embodiment, the generative artificial intelligence model may also be formed independently of the local training model 12 in one edge device. However, the generative artificial intelligence model for performing the performing the data synthesis based on the data distribution among the classes in the local data (S120) according to embodiments of the present disclosure may not be limited thereto, and the generative artificial intelligence model may also be mounted in a device outside one edge device and communicate with the edge device.

In an embodiment, in the performing the data synthesis based on the data distribution among the classes in the local data (S120), the generative artificial intelligence model may receive the local data embedded in each of the edge devices 10. After the local data is received, the generative artificial intelligence model may determine whether the data in the local data is uniform for each class based on pre-learned data. When the generative artificial intelligence model determines that the data in the local data is not uniform for each class, the generative artificial intelligence model may generate synthetic data such that the amount of data included in each class becomes uniform or such that deviation of data distribution included in each class is reduced.

Specifically, in each of the edge devices 10, maximum data having the largest amount of data among the data included in the local data and a synthesis reference class to which the maximum data belongs may be searched. Thereafter, a shortage of data amount for each of the plurality of classes relative to the maximum data (i.e., a difference in the amount of data between the maximum data and other data) may be operated through a difference between the searched maximum data and other data in the local data. A data difference ratio obtained by dividing the shortage of data amount by the entire data size of the local data may be operated, and individual synthetic data for each of the classes may be generated through random number generation using the data difference ratio. After the individual synthetic data are generated, the synthetic data may be generated by summing all the individual synthetic data, and complementary data may be generated by combining the synthetic data with the existing local data.

In an embodiment, when a data set of the local data held by each of the edge devices 10 is defined according to an [Equation 1] below, the complementary data may follow an [Equation 2] below, and the synthetic data, which is a difference between the complementary data and the local data before synthesis, may be defined according to an [Equation 3] below.

[Equation 1]

$$D_i = \{(x_1, y_1), (x_2, y_2), \dots, (x_n, y_n)\}$$

[Equation 2]

$$D_i' = D_i + G(D_i)$$

Here, $D_i$ means the local data before the data synthesis is performed, 'i' means each edge device, x means data in each class, y means a classification label for each class, n means the number of classes, and $D_i'$ means the complementary data.

[Equation 3]

$$G(D_i) = \sum_{c \in C, |D_{i,c}| > 0} G_c(D_i)$$

$G(D_i)$ means the synthetic data, c means each class, C means total classes, $D_{i,c}$ means the local data before the data synthesis is performed for the each edge device and the each class, and $G_c(D_i)$ means an individual synthetic data generated by the generative artificial intelligence model for each class.

In an embodiment, in a class in which data does not exist, data synthesis may not be performed. Specifically, synthetic data values may exist only when an absolute value of $D_{i,c}$, which is the local data before data synthesis for each of the edge devices and each class, is greater than 0.

In an embodiment, the data difference ratio may be operated according to an [Equation 4] below, and the process of generating the synthetic data through the random number generation using the data difference ratio may be operated according to an [Equation 5] below.

[Equation 4]

$$\Delta_c = \frac{\left|D_{i,max}\right| - \left|D_{i,c}\right|}{\left|D_i\right|} \ \ if \ \left|D_{i,c}\right| > 0$$

[Equation 5]

$$G_c(D_i) = \begin{bmatrix} r(1, \Delta_c \cdot |D_i|) \ if \ |D_{i,c}| > 0 \\ 0 \qquad\qquad if \ |D_{i,c}| = 0 \end{bmatrix}$$

Here, $\Delta_c$ means the data difference ratio for the each class, $D_{i,max}$ means the maximum data belonging to the synthesis reference class among the data included in the local data, the absolute value sign means a size of data, and $r(1, N)$ means a function that generates a random integer greater than or equal to 1 and less than N.

According to the [Equation 4], the data difference ratio for each class means a ratio obtained by dividing a difference between maximum data belonging to a class having the largest amount of data and data belonging to each class by an entire data size.

According to the [Equation 5], when the individual synthetic data for each class and each edge device belongs to a class in which data does not exist (e.g., a class having a data value of 0), a value of 0 may be output. In addition, when the individual synthetic data for each class and each edge device belongs to a class in which data exists (e.g., a class having a data value other than 0), the individual synthetic data may have a value generated as a random integer between 1 and the data difference ratio for each class.

The complementary data generated through Equation 2 may be more uniform in the distribution of data for each class than the distribution of data for each class of the local data before synthesis is performed. Accordingly, through the performing the data synthesis based on the data distribution among the classes in the local data (S120), the data distribution of the local data having a non-IID data distribution may be complemented to approach an IID data distribution.

In the determining and selecting the data approximating the IID distribution among the complementary data of the edge devices 10 (S140), a weight of the complementary data may be transmitted from each of the edge devices 10 to the central server 20. The central server 20 may operate an individual data ratio, which is a ratio of data belonging to each class in each edge device, from the weight of the complementary data of each of the edge devices 10. For example, the individual data ratio may be a value obtained by dividing a size of the complementary data in a specific class of each edge device by a size of the complementary data in all classes of each edge device.

In the determining and selecting the data approximating the IID distribution among the complementary data of the edge devices 10 (S140), the central server 20 may collect the individual data ratios from each edge device and operate a global data ratio. The global data ratio may be generated by selecting at least a portion of the individual data ratios. For example, the global data ratio may be a value operated for some of the edge devices among all the edge devices 10. Specifically, the value of the global data ratio may be a reference value for determining the data approximate to the IID distribution.

In an embodiment, the individual data ratio may be defined according to an [Equation 6] below, and the global data ratio may be defined according to an [Equation 7] below.

[Equation 6]

$$p_i(y_c) = \frac{\left|(x_j, y_j) \in D_i' : y_j = y_c\right|}{\left|D_i'\right|}$$

[Equation 7]

$$p_g(y_c) = \frac{\sum_{i=1}^{m} p_i(y_c) \cdot |D_i'|}{\sum_{i=1}^{m} |D_i'|}$$

Here, $x_j$ means a data in the each class, $y_j$ is a classification label for the each class, $|D_i'|$ means a size of the complementary data included in the each edge device, $y_c$ means a classification label of a specific class, $p_i(y_c)$ means the individual data ratio, and $p_g(y_c)$ means the global data ratio for the each class.

In an embodiment, the central server 20 may operate a difference between the individual data ratio for each edge device and an IID distribution ratio, which is a reciprocal of the total number of the classes. Thereafter, based on the difference between the individual data ratio and the IID distribution ratio, arbitrary individual data ratios may be selected such that a value of the global data ratio approaches the IID distribution ratio. Subsequently, an edge device having the selected individual data ratio may be selected by the central server 20 to perform local learning for the federated learning.

In an embodiment, the IID distribution ratio may be selected according to an [Equation 8] below. In an embodiment, a process of operating a distance (or difference) between the global data ratio and the IID distribution ratio may be operated according to an [Equation 9] below.

[Equation 8]

$$p_{IID}(y_c) = \frac{1}{|C|}$$

[Equation 9]

$$\sum_{c=1}^{C} d(p_i(y_c), p_{IID}(y_c))$$

Here, C means number of the total classes, $p_{IID}(y_c)$ means the IID distribution ratio for the each class, and $d(p_i(y_c), p_{IID}(y_c))$ means a distance function between the global data ratio for each class and each device and the IID distribution ratio for each class.

In an embodiment, the distance function according to the [Equation 9] may be a distance function that operates Euclidean distance. In another embodiment, the distance function according to the [Equation 9] may be a distance function that operates Manhattan distance. In still another embodiment, the distance function according to the [Equation 9] may be a distance function that operates using a Fisher information matrix. However, the type of the distance function according to embodiments of the present disclosure may not be limited thereto.

In an embodiment, after performing an operation according to the distance function, individual data ratios may be selected such that the global data ratio approaches the IID distribution ratio. Accordingly, edge devices 10 having the selected individual data ratios may be selected.

In an embodiment, after local learning of the sampled edge device is completed, results of the local learning may be transmitted to the central server 20. For example, the results of the local learning may be weight values (or information on the weights) collected from the local training model 12 included in the sampled edge device. In an embodiment, the central server 20 may perform a first operation of generating global weights by aggregating the weights of the sampled edge devices and operating an average. For example, the first operation may be operated according to an [Equation 10] below.

[Equation 10]

$$\theta_{g_e} + 1 = \frac{n_g}{K} \sum_{k=1}^{K} \theta^k{}_{g_e}$$

Here, $n_g$ means a learning rate of a global training model which aggregates the result of the local learning, $g_e$ means a global epoch of the each edge device, 'K' means number of the edge devices which are sampled, 'k' means the each edge device which is sampled, and $\theta$ means a weight value collected from the each edge device which is sampled. An operation according to the [Equation 10] may be referred to as a FedAvg algorithm of federated learning

In an embodiment, the central server 20 may aggregate the weights of the sampled edge devices by averaging the results of the local learning and generate an approximation function that limits a range of the average. For example, the second operation may be operated according to an [Equation 11]. When operated according the [Equation 11], the update of each edge device may be limited close to the global weight, thereby reducing or preventing divergence of the value of the local training model 12. In an embodiment, the central server 20 may generate the global weight based on the average and the approximation function.

[Equation 11]

$$h\left(\theta^k{}_{g_e}\right) = f_n\left(\theta^k{}_{g_e}\right) + \frac{\mu}{2} \left\| \theta^k{}_{g_e} - \theta_{g_e} \right\|^2$$

Here, $h(\theta^k{}_{g_e})$ means the approximation function, $f_n(\theta^k{}_{g_e})$ means a loss function of the each edge device, $g_e$ means a global epoch of the each edge device, 'K' means number of the edge devices which are sampled, 'k' means the each edge device which is sampled, $\theta$ means a weight value collected from the each edge device which is sampled, $\mu$ means an adjustable parameter, and $\|\theta^k{}_{g_e} - \theta_{g_e}\|^2$ means a square of a distance between a weight for the each edge device and the global epoch and a weight for all devices and the global epoch.

In an embodiment, the central server 20 may operate prediction probability in order to reduce an influence of a missing class, which is included in some of the sampled edge devices but not included in other devices. The central server 20 may generate global data based on the weights aggregated from the edge devices and the prediction probability. For example, the prediction probability may be multiplied by each of the weights. However, an operation method of the prediction probability and the weights according to embodiments of the present disclosure may not be limited thereto.

In an embodiment, the prediction probability may be operated according to an [Equation 12] below. When operated according to the [Equation 12], the influence of a missing class, which is included in some of the sampled edge devices but not included in the other devices among the classes received from all the edge devices, may be reduced, and the influence of an observation class, which is included in all of the sampled edge devices among the entire classes, may be increased. Accordingly, a time to reach convergence from the local data of the edge devices having a non-IID data distribution may be reduced.

[Equation 12]

$$\pi_{i,y} \quad \frac{\exp(\alpha_y w_y h_i)}{\sum_{j=1}^{C} \exp(\alpha_j w_j h_i)}$$

Here, 'i' means the each edge device, 'y' means each class, 'C' means total classes, $\pi_{i,y}$ means the prediction probability, $\alpha_y$ means a parameter which has a value of 1 for an observation class and has a value between 0 and 1 for a missing class, $h_i$ means a feature vector for the each edge device, $w_y$ means a weight vector for each class, and 'exp' means an operation performed by an exponential function. An operation according to the [Equation 12] may be referred to as a FedRS (federated learning restricted softmax) algorithm of federated learning.

However, a process of calculating the global weight according to embodiments of the present inventive concept may not be limited thereto, and various calculations may be used to calculate the global weight.

As described above, in the federated learning method according to embodiments of the present inventive concept, a data synthesis may be performed based on a data distribution among classes in the local data of each of edge devices 10, and data approximating an IID distribution may be identified and selected from among a complementary data of the edge devices 10. Accordingly, sampling edge devices 10 to participate in the federated learning by identifying a combination of arbitrary edge devices having a distribution approximating the IID distribution from among the plurality of edge devices may be possible. Accordingly, a performance deviation during the federated learning process may be reduced, and a convergence speed of a global training model 22 in a central server 20 may be accelerated, thereby enabling high-performance federated learning even in environments where data is imbalanced or insufficient.

As described above, in the federated learning system 1 according to embodiments of the present inventive concept, each of the plurality of edge devices 10 may perform the data synthesis, and the central server 20 may search for the edge devices having a distribution approximating the IID distribution and select edge devices to participate in the federated learning. Accordingly, the federated learning system 1 with improved performance may be easily provided.

In an embodiment, the federated learning method may be implemented in the form of program instructions on a computer-readable recording medium that may be executed through various types of computing devices and may be recorded on the computer-readable recording medium. The computer-readable recording medium may include program instructions, data files, data structures, and the like alone or in combination.

The program instructions recorded on the computer-readable recording medium may be specially designed and configured for the present disclosure, or may be those known and available to those skilled in the field of computer software. Examples of the computer-readable recording medium include magnetic media such as a hard disk, a floppy disk, and a magnetic tape, optical recording media such as a CD-ROM and a DVD, magneto-optical media such as a floptical disk, and hardware devices specially configured to store and execute program instructions such as ROM, RAM, and flash memory.

Examples of the program instructions include not only machine code such as those generated by a compiler but also high-level language code that may be executed by a computer using an interpreter and the like. The hardware device may be configured to operate as one or more software modules to perform processing according to the present disclosure, and vice versa

The federated learning system and federated learning method of the present disclosure may continuously implement high-performance learning while ensuring data privacy by using various types of devices, electronic devices, communication devices, servers, or combinations thereof that perform federated learning.

While the present inventive concept has been described above with reference to exemplary embodiments, it will be understood by those skilled in the art that the present inventive concept may be variously modified and changed without departing from the spirit and scope of the present inventive concept as defined in the following claims.

**Claims**

1.  A federated learning method comprising:

    sampling at least one edge device to perform a federated learning based on a local data of each of edge devices;
    aggregating a result of a local learning by performing the local learning of the edge device which is sampled;
    generating a global weight based on the result of the local learning which is aggregated; and
    broadcasting the global weight to each of the edge devices.

2.  The method of claim 1, wherein the sampling of at least one edge device includes:

    performing a data synthesis based on a data distribution among classes in the local data in each of the edge devices; and
    determining and selecting a data approximating an IID (independent and identically distributed) distribution among complementary data for which the data synthesis is completed.

3.  The method of claim 2, wherein the performing of the data synthesis includes:

    searching for a synthesis reference class to which a maximum data among the classes in the local data belongs;
    generating an individual synthetic data for each class based on a data size difference between the maximum data and a data included in a class other than the synthesis reference class among the classes; and
    generating a complementary data using the local data before the data synthesis and the individual synthetic data.

4.  The method of claim 3, wherein in the generating of the individual synthetic data,

the individual synthetic data for a class whose data size is not 0 is generated using a data difference ratio obtained by dividing the data size difference by a total data size of the edge device where the local data is stored.

5. The method of claim 4, wherein in the generating of the individual synthetic data, a size of the individual synthetic data for a class, which has a data size of 0, is 0.

6. The method of claim 4, wherein the data difference ratio is defined according to an [Equation 1] below.

[Equation 1]

$$\Delta_c = \frac{\left|D_{i,max}\right| - \left|D_{i,c}\right|}{\left|D_i\right|} \ if \ \left|D_{i,c}\right| > 0$$

Here, $D_{i,c}$ means the local data before the data synthesis for each edge device and each class is performed, $\Delta_c$ means the data difference ratio for the each class, $D_{i,max}$ means the maximum data belonging to the synthesis reference class among the data included in the local data, and $D_i$ means the local data before the data synthesis for the each edge device is performed; and an absolute value symbol means a size of the data.

7. The method of claim 6, wherein the individual synthetic data is generated according to [Equation 2] below.

[Equation 2]

$$G_c(D_i) = \begin{bmatrix} r(1, \Delta_c \cdot |D_i|) \ if \ \left|D_{i,c}\right| > 0 \\ 0 \qquad\qquad if \ \left|D_{i,c}\right| = 0 \end{bmatrix}$$

Here, $G(D_i)$ means the individual synthetic data for the each class and the each edge device, and $r(1,N)$ means a function that generates a random integer greater than or equal to 1 and less than N.

8. The method of claim 2, wherein the aggregating of the result of the local learning includes:

generating an individual data ratio for each edge device and each class using the complementary data for which is synthesized;
operating a distance between an IID distribution ratio, which is an inverse of total classes, and the individual data ratio;
searching for a global data ratio approximating the IID distribution ratio based on the distance between the individual data ratio and the IID distribution ratio; and
selecting the edge devices which have the global data ratio.

9. The method of claim 8, wherein in the operating of the distance between an IID distribution ratio and the individual data ratio, the distance between the IID distribution ratio and the individual data ratio is operated using a Fisher information matrix.

10. The method of claim 8, wherein in the generating of the individual data ratio, the individual data ratio is operated according to an [Equation 3] below.

[Equation 3]

$$p_i(y_c) = \frac{\left|(x_j, y_j) \in D_i' : y_j = y_c\right|}{\left|D_i'\right|}$$

Here, 'i' means the each edge device, 'c' means the each class, $x_j$ means a data in the each class, $y_j$ means a classification label for the each class, $D_i'$ means the complementary data of the each edge device, and $p_i(y_c)$ means the individual data ratio.

11. The method of claim 8, wherein in the searching for the global data ratio approximating the IID distribution ratio, the global data ratio is operated according to an [Equation 4] below.

[Equation 4]

$$p_g(y_c) = \frac{\sum_{i=1}^{m} p_i(y_c) \cdot |D_i'|}{\sum_{i=1}^{m} |D_i'|}$$

Here, 'i' means the each edge device, 'm' means a number of the edge device selected for operating the global data ratio, $|D_i'|$ means a size of the complementary data included in the each edge device, $y_c$ means a classification label of a specific class, $p_i(y_c)$ means the individual data ratio, and $p_g(y_c)$ means the global data ratio for the each class.

12. The method of claim 1, wherein in the generating of the global weight,
the global weight is generated based on an average of weights collected from the edge devices on which the local learning is performed.

13. A federated learning system comprising:

a plurality of edge devices configured to perform a local learning using a local data which is stored and to synthesize a data based on a data distribution among classes in the local data; and
a central server configured to receive a weight of complementary data synthesized from each of the plurality of edge devices, and to sample an edge device to participate in a federated learning among the plurality of edge devices based on the weight of the complementary data.

14. The system of claim 13, wherein each of the plurality of edge devices is configured to determine a synthesis reference class to which a maximum data among the classes belongs, and to generate a synthetic data based on a data size difference between the maximum data and a data included in a class different from the synthesis reference class.

15. The system of claim 14, wherein the synthetic data includes an individual synthetic data for each class; and
the complementary data is a sum of the local data before synthesis and the synthetic data.

FIG. 1

# FIG. 2

```
                    ( START )
                        │
                        ▼
┌─────────────────────────────────────────┐
│     SAMPLING AN EDGE DEVICE TO PERFORM   │
│   A FEDERATED LEARNING BASED ON A LOCAL DATA │ ～S10
│          OF EACH OF EDGE DEVICES         │
└─────────────────────────────────────────┘
                        │
                        ▼
┌─────────────────────────────────────────┐
│       LOCAL LEARNING ON THE EDGE DEVICE  │ ～S20
│            WHICH IS SAMPLED              │
└─────────────────────────────────────────┘
                        │
                        ▼
┌─────────────────────────────────────────┐
│  AGGREGATING A RESULT OF LOCAL LEARNING WHICH IS │ ～S30
│        COLLECTED IN A CENTRAL SERVER     │
└─────────────────────────────────────────┘
                        │
                        ▼
┌─────────────────────────────────────────┐
│       BROADCASTING AN UPDATED GLOBAL WEIGHT │ ～S40
│          TO EACH OF THE EDGE DEVICES     │
└─────────────────────────────────────────┘
                        │
                        ▼
                    ( END )
```

# FIG. 3

S10

```
┌─────────────────────────────────────────┐
│   PERFORMING A DATA SYNTHESIS BASED ON A DATA │ ～S120
│  DISTRIBUTION AMONG CLASSES IN THE LOCAL DATA │
└─────────────────────────────────────────┘
                        │
                        ▼
┌─────────────────────────────────────────┐
│  DETERMINING AND SELECTING A DATA APPROXIMATING │
│   AN IID DISTRIBUTION AMONG COMPLEMENTARY │ ～S140
│          DATA OF THE EDGE DEVICES        │
└─────────────────────────────────────────┘
```

# FIG. 4

S120 — AT EACH EDGE DEVICE :

DATA GENERATION W / GEN AI

ORIGINAL DATA    SYNTHETIC DATA

S140 — AT CENTRAL SERVER :

BALANCED SAMPLING

✖ :SAMPLED
✔ :UNSAMPLED

FIG. 5

NONIID TO IID APPROXIMATION

W/ GENERATIVE AI

BEFORE    AFTER

S120

$t_1$  $t_2$  $t_3$  $t_4$  $t_5$  $t_6$

$t_1$  $t_2$  $t_3$  $t_4$  $t_5$  $t_6$

○□△▱◇ ORIGINAL DATA    △▨▱◇ SYNTHETIC DATA    FOUNDATION MOEDL

# FIG. 6

S140

$\Theta_{ge}^1$   $\Theta_{ge}$

$\Theta_{ge}^2$   $\Theta_{ge}$

$\Theta_{ge}^3$   $\Theta_{ge}$

$\Theta_{ge}^4$   $\Theta_{ge}$

ALL EDGE

$\Theta_{ge}^4$   $\Theta_{ge}$

AGGREGATE

✘   ✔   ✘   ✔

■ GLOBAL MINIMUM   ● AGGREGATED MOEDL   ⟶ BALANCED SAMPLING   ⇢ BROADCAST

✘ : SAMPLED

✔ : UNSAMPLED

# EP 4 776 188 A1

**EUROPEAN SEARCH REPORT**

Application Number

EP 25 20 5252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y. LEE ET AL: "Generative AI-powered plugin for robust federated learning in heterogeneous IoT networks", ARXIV.ORG, CORNELL UNIVERSITY LIBRARY, 201 OLIN LIBRARY CORNELL UNIVERSITY ITHACA, NY 14853, 31 October 2024 (2024-10-31), XP091922466, DOI: 10.48550/arXiv.2410.23824 * sections II and III * ----- | 1-15 | INV. G06N3/098 G06N3/045 G06N3/0475 |

TECHNICAL FIELDS SEARCHED (IPC)

G06N

The present search report has been drawn up for all claims

| Place of search | Date of completion of the search | Examiner |
|---|---|---|
| The Hague | 24 February 2026 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250004415